# EUROPEAN PATENT APPLICATION

(11) **EP 2 687 887 A1**
(43) Date of publication of application: **22.01.2014**
(21) Application number: 12197706.0
(22) Date of filing: 18.12.2012
(51) Int. Cl.: G02B 6/38

(54) **Optical fiber connector assembly**

(30) Priority: 20.07.2012 LV 120124
(71) Applicant: Rigas Tehniska universitate, Riga 1658 (LV)
(72) Inventor: Ivanovs, Maksims, 1048 Rïga (LV); Porins, Jurgis, 1011 Rïga (LV); Supe, Andis, 4101 Cesis (LV)
(74) Representative: Fortuna, Jevgenijs

(57) **Abstract**

The invention relates to the field of telecommunications, in particular to the optical fiber coupling technologies and optical fiber connectors. The offered optical fiber connector assembly comprises a first connector and a second connector provided with means for releasably fixing the connectors together, wherein both - the first and the second connector have an aperture adapted for receiving an optical fiber end with a ferrule and are provided with means for moving optical fiber end out of the connector to complete an optical connection and returning back the optical fiber end to the connector, and means for controllable closing and opening the aperture, and protecting the optical fiber end from negative influence of external environment; the means for controllable closing and opening said aperture being adapted for opening the aperture before or when means for moving optical fiber end out of the connector is activated and closing the aperture - when optical fiber end is returned back to the connector. The offered connector assembly provides improved optical fiber end protection from influence of external environment, still being easy-to-use and ensuring contact, which eliminates signal losses and provides the possibility to adjust the contact force between the connectors.

## Description

### Technical Field

The invention relates to the field of telecommunications, in particular to the optical fiber interconnection technologies and optical fiber connectors.

### Background Art

In practice two types of optical fiber connections are typically used - dismountable and non-dismountable. The connectors mechanically couple and align the cores of fibers so that optical signal can pass. The class of dismountable optical fiber connectors has different standards, each having its advantages and disadvantages. The most widely used optical fiber connectors for optical transmission systems are SC, ST or FC type connectors. Such connector designs consist of two identical end caps and the central connector's element called an adapter (e.g. EP 0203611 B1). The adapter ensures that connector caps attached to both ends of optical fibers to be connected are accurately mutually centered to make as low insertion losses, as possible. Disuse of adapter end caps is the cause of additional losses in optical fiber lines. An alternative solution is to develop optical end caps, which can be interconnected with each other without additional central element, while ensuring precise positioning of the optical fibers (US 8292515 B2, EP 1546781 B1).

End caps of the connector disclosed in US 8292515 are designed such that they are compatible with each other by centering pins. Such a connector provides quick set up of optical fiber connection without using additional structural elements. The main disadvantage of the known solution is that the optical fiber caps are placed at a distance from one another. So that between the two cores of fibers the air gap is formed, bringing in an additional attenuation. Moreover, such a design does not provide sufficient protection against dust settling on the fiber ends.

### Disclosure of the Invention

The aim of the invention is to develop a reliable, simple-to-use optical connector assembly having low insertion loss and better optical fiber end protection. This task was achieved by creating a connector assembly with improved optical fiber end protection from influence of external environment (i.a. dust and dirt) and easy-to-use connectors providing contact, which eliminates signal losses as well as providing the possibility to adjust the contact force between the optical fiber caps.

According to the preferred embodiment the connector assembly consists of two identical connectors. However other possible embodiments are also disclosed hereunder. The offered optical fiber connector assembly comprises a first connector and a second connector provided with means for releasably fixing the connectors together, wherein both - the first and the second connector have an aperture adapted for receiving an optical fiber end with a ferrule and are provided with means for moving optical fiber end out of the connector to complete an optical connection and returning back the optical fiber end to the connector, and means for controllable closing and opening the aperture and protecting the optical fiber end from negative influence of external environment; the means for controllable closing and opening said aperture being adapted for opening the aperture before or when means for moving optical fiber end out of the connector is activated and closing the aperture - when optical fiber end is returned back to the connector.

Each connector may contain: a connector cap, a protective diaphragm shutter mechanism, a shell and a slidable member. The slidable member can comprise an optical fiber end with a ferrule and be adapted to slide inside the shell, along its longitudinal axis upon rotation of the shell about its longitudinal axis. The diaphragm shutter mechanism can be adapted to close and open a protective diaphragm upon rotation of the shell about its longitudinal axis; the connector cap can be provided with means for releasably fixing two connectors together and adapted for allowing the optical fiber end with a ferrule to pass through towards the second optical fiber end in the second connector to establish an optical connection.

The invention also relates to the means for controllable closing and opening the aperture being e.g. a diaphragm shutter mechanism, one embodiment of which comprising a diaphragm, a diaphragm supporting member, a guiding means and a slidable member; the diaphragm shutter mechanism being adapted to protect the fiber from influence of external environment, including dust and scratches. The diaphragm shutter mechanism may be either coupled to the means for moving optical fiber end out of the connector and returning it back, or work independently from said means to ensure opening the aperture before or at actuation of the means for moving optical fiber end out of the connector.

### Brief Description of Drawings

Fig. 1 shows a side view of one embodiment of the non-assembled connector;
Fig. 2 is a side view of the connector with disassembled diaphragm shutter mechanism;
Fig. 3 is a side view of another embodiment of the non-assembled connector and a cross-sectional side view of the assembled connector;
Fig. 4 is a side view of the third embodiment of the non-assembled connector;
Fig. 5 is a side view of a slidable member;
Fig. 6 is a view of the shell and diaphragm shutter mechanism, wherein 6A shows diaphragm almost closed, but 6B - diaphragm opened;
Fig. 7A shows a connector with closed diaphragm and hidden fiber end; Fig. 7B shows a connector with opened diaphragm and pulled out fiber end and ferrule;
Fig. 8 shows possible direction of rotation of the shell and direction of movement of the slidable member;
Fig. 9 is a side view of two connectors ready for engagement;
Fig. 10A shows two connectors to be engaged and Fig. 10B - two connectors in engaged position;
Fig. 11 shows cross-sectional side view of two connectors in engaged position.

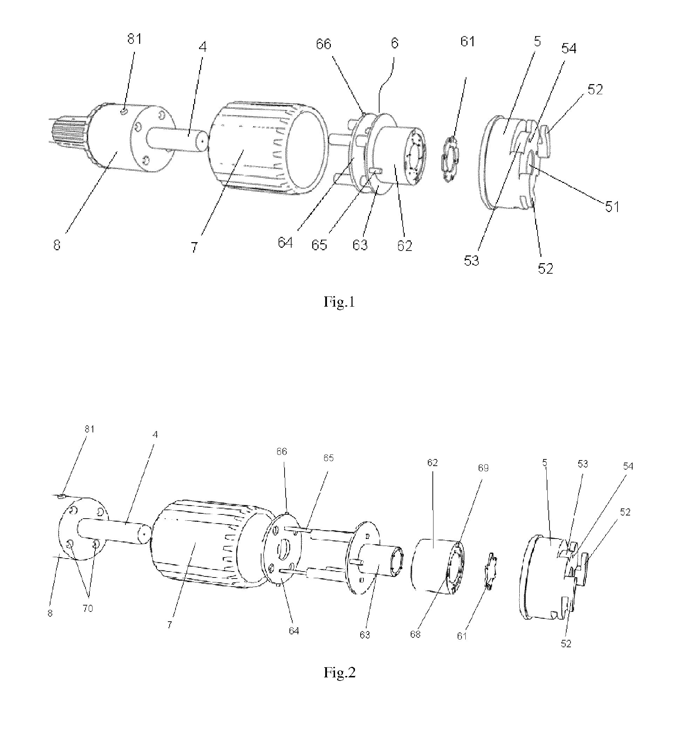

The optical fiber connector assembly 1 comprising a first connector 2 and a second connector 3 (Fig. 1, 9-11). The connectors 2 and 3 are being provided with means for releasably fixing the connectors 2 and 3 together. The first and the second connector 2 and 3 comprise: a ferrule 4, a connector cap 5 having an aperture 51 adapted for receiving an optical fiber end with a ferrule 4; a diaphragm shutter mechanism 6 adapted for controllable closing and opening the aperture 51; a slidable member 8 provided with one or more pins 81 and comprising the optical fiber end with a ferrule 4; a shell 7 adapted for housing the slidable member 8. The shell 7 is adapted to ensure coaxial location of the slidable member 8, the diaphragm shutter mechanism 6 and the cap 5. The slidable member 8 is adapted for protecting the fiber from excessive bending and pivoting during use the connectors 2 and 3.

The shell's 7 inside walls are being provided with grooves adapted for receiving the pins 81 and allowing them passing through, thus allowing controllable slidable motion of the slidable member 8 along longitudinal axis of the shell 7 (in back and forth direction). Said grooves are preferably having stops adapted to releasable fixing the slidable member 8 in "opened" and "closed" position. The diaphragm shutter mechanism 6 is being attached to the shell 7 and the connector cap 5, such that when rotating the shell 7 of the connector 2 and/or 3 around its longitudinal axis and mutually engaging the means for releasably fixing the connectors 2 and 3, the optical fiber end with the ferrule 4 in one or both connectors (2 and/or 3) moves towards the optical fiber end in the other connector (2 and/or 3) through the diaphragm openings in both connectors and the openings 51 to complete an optical connection.

Instead of pins 81, the slidable member 8 can be provided with thread 81 or its segment and the grooves on the inside walls of the shell 7 can be adapted to allow the thread 81 or its segment to pass through said grooves, allowing controllable slidable motion of the slidable member 8 along longitudinal axis of the shell 7.

The means for releasably fixing the connectors 2 and 3 together can comprise one or more projections 52 and one or more recesses 53 on the connector caps 5; the projections 52 being adapted to be engaged with recesses 53.

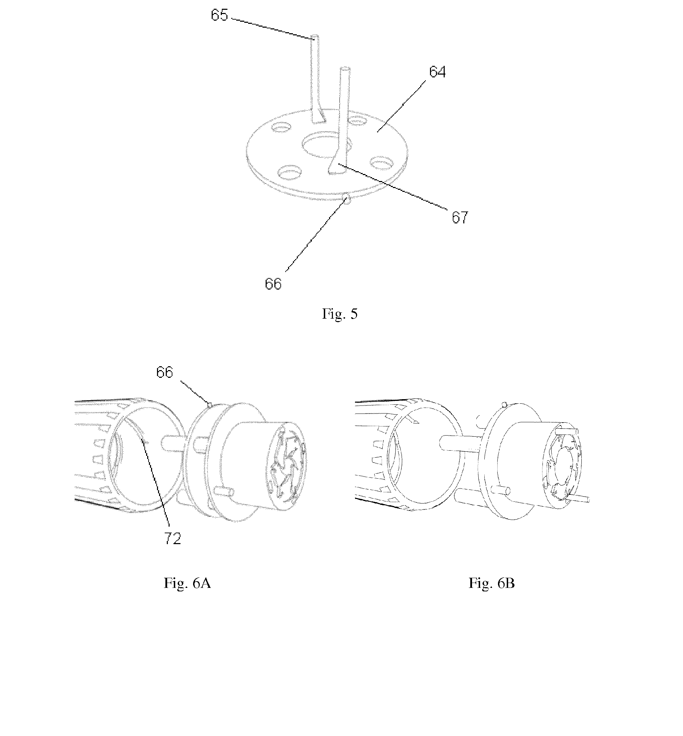

According to one embodiment of the diaphragm shutter mechanism 6, it comprises a diaphragm 61 (which is adapted to protect the fiber from influence of external environment, including dust and scratches), a diaphragm supporting member 62 having one or more apertures 68 and one or more apertures 69, a guiding means 63, a slidable member 64 having one or more pins 65 and one or more pins 66, wherein the cap 5 being provided with one or more apertures 54 adapted for allowing the pins 65 to pass through the cap 5 of the connectors 2 and 3; the pins 65 projecting substantially parallel to the longitudinal axis of the optical fiber connector assembly 1 and having a gradual widening 67 of its base part attached to the member 64, preferably from one side of the pin 65 (Fig. 2, 3, 5). The pins 65 are also adapted to provide for an accurate centering of the connectors 2 and 3. The diaphragm 61 is being mounted on the diaphragm supporting member 62 such that upon rotation of the member 62 around its longitudinal axis, the diaphragm 61 can be opened and closed; the member 62 is being rotatably mounted on the guiding means 63; the apertures 68 of the member 62 being adapted for allowing the pins 65 to pass through the member 62 and upon engagement and sliding of the pin widening 67 along inner wall of the aperture 68 - to force rotation the member 62 around its longitudinal axis; while from the side adjacent to the cap 5 the member 62 is provided with one or more slanting hollows, each having the aperture 69 in their bottom part, said slanting hollows being adapted for engagement with peripheral part of the pins 65 and allowing sliding of the pins 65 along walls of said hollows and entering the aperture 69 thus causing to force rotation of the member 62 in the opposite connector 2 or 3 around its longitudinal axis; the guiding means 63 being also adapted for guiding the slidable member 64 allowing its slidable motion along the longitudinal axis of the optical fiber connector assembly 1; the shell 7 is being adapted for housing the slidable member 64; the shell's 7 inside walls being provided with grooves 72 (Fig. 6A, 6B) adapted for receiving the pins 66 and allowing them passing through, thus allowing controllable slidable motion of the slidable member 64 along longitudinal axis of the shell 7. The diaphragm shutter mechanism 6 may further comprise stopping means 70 adapted for preventing the slidable member 64 to fall down from the guiding means 63.

The means for moving optical fiber end out of the connector to complete an optical connection and returning back the optical fiber end to the connector may comprise the slidable member 8 and the shell 7, while the means for controllable closing and opening the aperture 51 may comprise the diaphragm shutter mechanism 6.

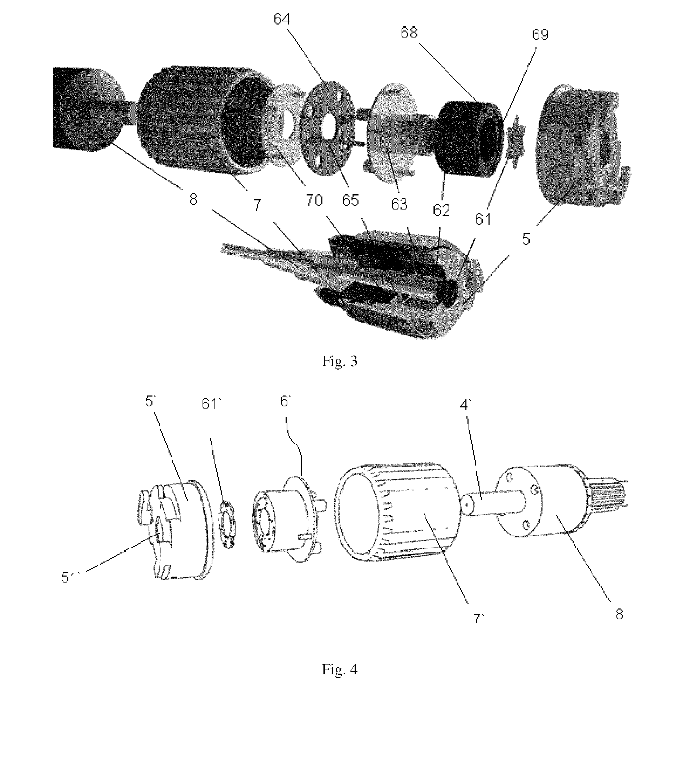

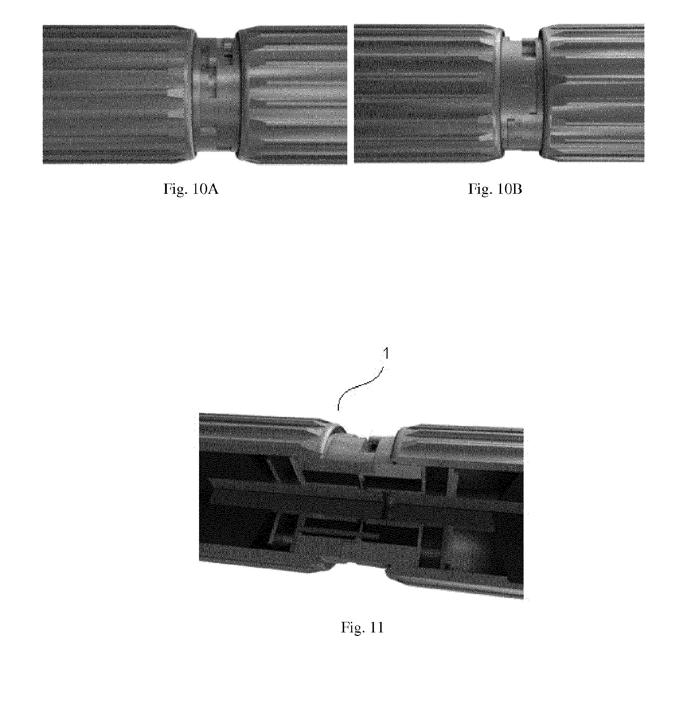

According to another embodiment (Fig. 4), the optical fiber end (preferably with ferrule 4) can be fixed in the connector 3; alternatively, the connector 3 can be directly installed on the optical device and instrument. According to this embodiment the second connector 3 comprises: a connector cap 5' having an aperture 51' adapted for receiving an optical fiber end with a ferrule 4 (from the connector 2); a diaphragm shutter mechanism 6' adapted for closing the aperture 51', and provided with means for opening the diaphragm when the connectors 2 and 3 are being engaged and closing the diaphragm when the connectors 2 and 3 are being disengaged; a shell 7' comprising the optical fiber end (preferably with a ferrule 4'). The diaphragm shutter mechanism 6' is being attached to the shell 7' and the connector cap 5' such that when rotating the shell 7 of the connector 2 around its longitudinal axis and mutually engaging the means for releasably fixing the connectors 2 and 3, the optical fiber end with the ferrule 4 in the connector 2 can move towards the optical fiber end in the connector 3 through the diaphragm openings in both connectors and the openings 51 and 51' to complete an optical connection (Fig. 11).

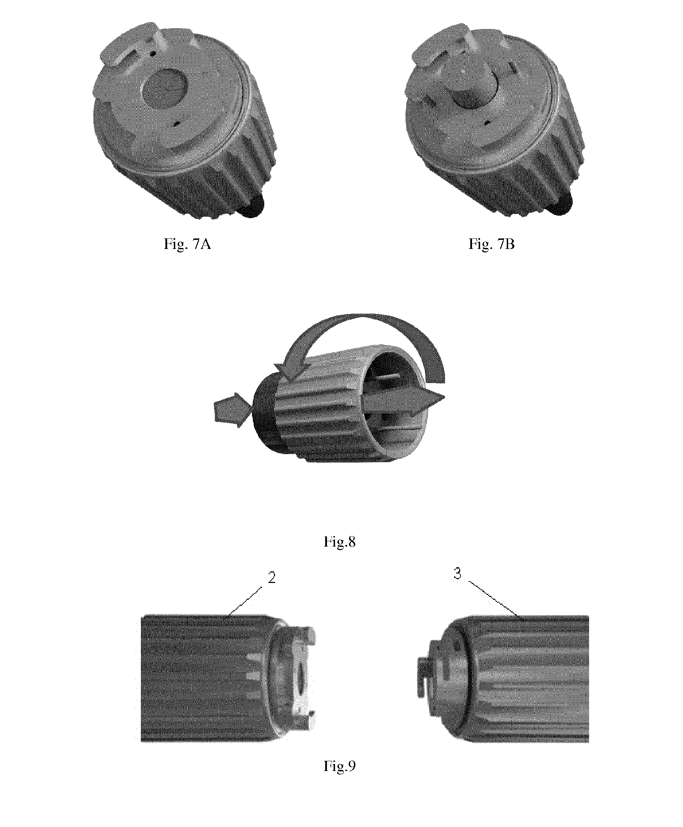

According to said embodiment of the connector 3, the means for releasably fixing the connectors 2 and 3 together can comprise one or more projections 52 and one or more recesses 53 on the connector cap 5 of the connector 2, as well as one or more projections 52' and one or more recesses 53' on the connector cap 5' of the connector 3; the projections 52 being adapted to be engaged with recesses 53', and projections 52' being adapted to be engaged with recesses 53 (Fig. 1, 7A).

According to said embodiment of the connector 3, the diaphragm shutter mechanism 6' comprises a diaphragm 61', a diaphragm supporting member 62' having one or more apertures 69', a guiding means 63', wherein the cap 5' being provided with one or more apertures 54' adapted for allowing the pins 65 to pass through the cap 5' of the connector 3; the diaphragm 61' is being mounted on the diaphragm supporting member 62' such that upon rotation of the member 62' around its longitudinal axis, the diaphragm 61' can be opened and closed; the member 62' is being rotatably mounted on the guiding means 63'; from the side adjacent to the cap 5' the member 62' is provided with one or more slanting hollows, each having the aperture 69' in their bottom part, said slanting hollows being adapted for engagement with peripheral part of the pins 65 of the connector 2 and allowing sliding of the pins 65 along walls of said hollows and entering the aperture 69' thus causing to force rotation the member 62' around its longitudinal axis.

The grooves in the shell 7 adapted for receiving the pins 81 and the grooves adapted for receiving the pins 66 have different pitch of thread such to allow the slidable member 64 move forward quicker than the slidable member 8, so that the diaphragms 61 in both connectors 2 and 3 can be opened before the slidable member 8 will pull out the fiber end moving it through the diaphragms 61.

According to the invention, the connector 2 or 3 can be offered as a kit, which can be used for assembling the optical fiber connector assembly 1 and establishing an optical connection of optical fibers. This kit can contain minimum necessary elements of one connector 2 or 3 (possibly without ferrule 4, which can be provided separately or be substituted by the equivalent means).

The offered connector when assembled (Fig. 1 or 3) works as follows. The connector 2 and connector 3 are being faced each other (Fig. 9), the projections 52 of both connectors are being put into the respective recesses 53 of both connectors (Fig. 10A). The shell 7 of one of the connector (or shells 7 of both connectors) is being rotated around its longitudinal axis as shown in Fig. 8. As a result of said rotation, the projections 52 engage with the walls of the recesses 53 - the connectors 2 and 3 are releasably fixed (Fig. 10B), the slidable member 8 and the slidable member 64 start moving forward - towards the aperture 51 (the guiding means 63 do not move). Due to different thread pitch between the grooves in the shell 7 adapted for receiving the pins 81 and the grooves adapted for receiving the pins 66, the slidable member 64 travels forward quicker than the slidable member 8. Upon engagement of the wall of the gradual widening 67 on the pin 65 with the inner wall of the aperture 68 of the diaphragm supporting member 62 and further movement of the pin 65 forward, the member 62 starts rotating, forcing the diaphragm 61 open; the slidable member 8 moves forward through the diaphragm 61 and the aperture 51 (either through the aperture 51 of one connector only or through the apertures 51 of both connectors - depending on whether the shell 7 of one connector only, or both connectors was rotated). If the shell 7 of only one connector is being rotated, the slidable member 8 and the slidable member 64 of the connector, which shell 7 is being rotated, travels longer distance, than if shell 7 of both connectors 2 and 3 are being rotated. In this case the peripheral parts of the pins 65 travel through the apertures 54 and engage walls of the slanting hollows in the member 62 of the other connector; the pins 65 slide along walls of said hollows pushing and forcing rotation of the member 62 in the opposite connector around its longitudinal axis and opening the respective diaphragm. This allows the fiber end from one connector to enter the aperture 51 in another connector and to complete an optical connection between the optical fiber in the connectors 2 and 3 (Fig. 11). The strength of connection can be adjusted by rotating one or both shells 7. The disengagement of the connectors 2 and 3 is being performed in reverse direction.

The shell 7 is preferably designed such that to hide the fiber end inside the connector (2 or 3) or to pull out the fiber end till "optical connection position", the shell is rotated for not more than 360°, preferably - 90 °. This can be reached by creating appropriate grooves in the shell 7 adapted for receiving the pins 81 and grooves adapted for receiving the pins 66. Said grooves can be designed such that during the first quarter or half of a turn, diaphragms 61 in both connectors are being opened; during the second quarter or half of a turn, the end of the optical fiber is being pulled out to complete an optical connection with optical fiber end in the second connector.

The offered connector assembly provides improved optical fiber end protection from influence of external environment, still being easy-to-use and ensuring contact, which eliminates signal losses and provides the possibility to adjust the contact force between the connectors 2 and 3.

## Claims

1. An optical fiber connector assembly (1) comprising a first connector (2) and a second connector (3) provided with means for releasably fixing the connectors (2 and 3) together, wherein both - the first and the second connector (2 and 3) have an aperture (51) adapted for receiving an optical fiber end with a ferrule (4) and are provided with means for moving optical fiber end out of the connector (2 and/or 3) to complete an optical connection and returning back the optical fiber end to the connector, and means for controllable closing and opening the aperture (51) and protecting the optical fiber end from negative influence of external environment; the means for controllable closing and opening said aperture being adapted for opening the aperture (51) before or when means for moving optical fiber end out of the connector is activated and closing the aperture (51) - when optical fiber end is returned back to the connector (2 and/or 3).

2. The connector assembly (1) according to claim 1, comprising the first connector (2) and the second connector (3) provided with means for releasably fixing the connectors (2 and 3) together, wherein both - the first and the second connector (2 and 3) comprise:
- a connector cap (5) having an aperture (51) adapted for receiving an optical fiber end with a ferrule (4);
- a diaphragm shutter mechanism (6) adapted for controllable closing and opening the aperture (51);
- a slidable member (8) provided with one or more pins (81) and comprising the optical fiber end with a ferrule (4),
- a shell (7) adapted for housing the slidable member (8); the shell's (7) inside walls being provided with grooves adapted for receiving the pins (81) and allowing them passing through thus allowing controllable slidable motion of the slidable member (8) along longitudinal axis of the shell (7);
wherein the diaphragm shutter mechanism (6) is being attached to the shell (7) and the connector cap (5), such that when rotating the shell (7) of the connector (2 and/or 3) around its longitudinal axis and mutually engaging the means for releasably fixing the connectors (2 and 3), the optical fiber end with the ferrule (4) in one or both connectors (2 and/or 3) moves towards the optical fiber end in the other connector (2 and/or 3) through the diaphragm openings in both connectors and the openings (51) to complete an optical connection.

3. The connector assembly according to claim 2, wherein the second connector (3) comprises:
- a connector cap (5') having an aperture (51') adapted for receiving an optical fiber end with a ferrule (4);
- a diaphragm shutter mechanism (6') adapted for closing the aperture (51'), and provided with means for opening the diaphragm when the connectors (2 and 3) are being engaged and closing the diaphragm when the connectors (2 and 3) are being disengaged;
- a shell (7') comprising the optical fiber end with a ferrule (4');
wherein the diaphragm shutter mechanism (6') is being attached to the shell (7') and the connector cap (5') such that when rotating the shell (7) of the connector (2) around its longitudinal axis and mutually engaging the means for releasably fixing the connectors (2 and 3), the optical fiber end with the ferrule (4) in the connector (2) can move towards the optical fiber end in the connector (3) through the diaphragm openings in both connectors and the openings (51 and 51') to complete an optical connection.

4. The connector assembly according to claim 2 or 3, wherein instead of pins (81) the slidable member (8) is provided with thread (81) or its segment and the grooves on the inside walls of the shell (7) are adapted to allow the thread (81) or its segment to pass through said grooves, allowing controllable slidable motion of the slidable member (8) along longitudinal axis of the shell (7).

5. The connector assembly according to claim 1, 2 or 3, wherein the means for releasably fixing the connectors (2 and 3) together comprise one or more projections (52) and one or more recesses (53) on the connector caps (5); the projections (52) being adapted to be engaged with recesses (53).

6. The connector assembly according to claim 3, wherein the means for releasably fixing the connectors (2 and 3) together comprise one or more projections (52) and one or more recesses (53) on the connector cap (5) of the connector (2), as well as one or more projections (52') and one or more recesses (53') on the connector cap (5') of the connector (3); the projections (52) being adapted to be engaged with recesses (53') and projections (52') being adapted to be engaged with recesses (53).

7. The connector assembly according to claims 2 or 5, wherein the diaphragm shutter mechanism (6) comprises a diaphragm (61), a diaphragm supporting member (62) having one or more apertures (68) and one or more apertures (69), a guiding means (63), a slidable member (64) having one or more pins (65) and one or more pins (66), wherein
- the cap (5) being provided with one or more apertures (54) adapted for allowing the pins (65) to pass through the cap (5) of the connectors (2 and 3);
- the pins (65) projecting substantially parallel to the longitudinal axis of the optical fiber connector assembly (1) and having a gradual widening (67) of its base part attached to the member (64), preferably from one side of the pin (65);
- the diaphragm (61) is being mounted on the diaphragm supporting member (62) such that upon rotation of the member (62) around its longitudinal axis, the diaphragm (61) can be opened and closed;
- the member (62) is being rotatably mounted on the guiding means (63); the apertures (68) of the member (62) being adapted for allowing the pins (65) to pass through the member (62) and upon engagement and sliding of the pin widening (67) along inner wall of the aperture (68) - to force rotation the member (62) around its longitudinal axis; while from the side adjacent to the cap (5) the member (62) is provided with one or more slanting hollows, each having the aperture (69) in their bottom part, said slanting hollows being adapted for engagement with peripheral part of the pins (65) and allowing sliding of the pins (65) along walls of said hollows and entering the aperture (69) thus causing to force rotation of the member (62) in the opposite connector (2 or 3) around its longitudinal axis;
- the guiding means (63) being also adapted for guiding the slidable member (64) allowing its slidable motion along the longitudinal axis of the optical fiber connector assembly (1);
- the shell (7) is being adapted for housing the slidable member (64); the shell's (7) inside walls being provided with grooves (72) adapted for receiving the pins (66) and allowing them passing through, thus allowing controllable slidable motion of the slidable member (64) along longitudinal axis of the shell (7).

8. The connector assembly according to claims 3 or 6, comprising the diaphragm shutter mechanism (6) as claimed in claim 6 and the diaphragm shutter mechanism (6') of the connector (3), comprising a diaphragm (61'), a diaphragm supporting member (62') having one or more apertures (69'), a guiding means (63'), wherein
- the cap (5') being provided with one or more apertures (54') adapted for allowing the pins (65) to pass through the cap (5') of the connector (3);
- the diaphragm (61') is being mounted on the diaphragm supporting member (62') such that upon rotation of the member (62') around its longitudinal axis, the diaphragm (61') can be opened and closed;
- the member (62') is being rotatably mounted on the guiding means (63'); from the side adjacent to the cap (5') the member (62') is provided with one or more slanting hollows, each having the aperture (69') in their bottom part, said slanting hollows being adapted for engagement with peripheral part of the pins (65) of the connector (2) and allowing sliding of the pins (65) along walls of said hollows and entering the aperture (69') thus causing to force rotation the member (62') around its longitudinal axis.

9. A kit comprising elements of the connector (2) and/or elements of the connector (3) of the optical fiber connector assembly (1) as claimed in any preceding claims.

10. Use of the connector assembly of any claims from 1 to 8 for the optical connection of optical fibers.

11. Use of the kit as claimed in claim 9 for optical connection of optical fibers.
